# EUROPEAN PATENT SPECIFICATION

(11) **EP 3 191 206 B1**
(45) Date of publication and mention of the grant of the patent: **06.01.2021**
(21) Application number: 15771358.7
(22) Date of filing: 11.09.2015
(51) Int. Cl.: B01D 39/18

(54) **FILTRATION MEDIA AND METHODS**
FILTERMEDIEN UND VERFAHREN
FILTRATION MEDIA AND METHODS

(30) Priority: 11.09.2014 US 201462049233 P; 10.09.2015 US 201514850504
(43) Date of publication of application: 19.07.2017
(73) Proprietor: Donaldson Company, Inc., Minneapolis, MN 55440-1299 (US)
(72) Inventor: ISRAEL, Joseph, St. Louis Park, Minnesota 55416 (US); WERSAL, Douglas A., Eden Prairie, Minnesota 55346 (US); UNTZ, Andrew J., Burnsville, Minnesota 55306 (US)
(74) Representative: Eisenführ Speiser
(86) International application number: PCT/US2015/049684
(87) International publication number: WO 2016/040800

(56) References cited:
- WO-A1-2010/054218
- US-A1- 2008 022 645
- US-A1- 2010 314 333

## Description

### Technological Field

The present technology generally relates to filtration media. More particularly, the present technology relates to fire retardant conductive filtration media, media pack assemblies, and methods.

US 2010/314333 A1 discloses fiber webs formed of one or more types of fibers and a resin formulation to provide mechanical and chemical properties. A resin formulation may comprise several components including a resin, a cross linking agent and a conductive material, amongst other additives. The fiber web may also include a flame retardant agent.

### Summary

In an embodiment, a filter media is provided. The filter media can include a fiber matrix and a binder matrix distributed throughout the fiber matrix. Conductive particles are impregnated in the binder matrix and a flame retardant is distributed throughout the fiber matrix and the binder matrix.

In one example embodiment, the filter media has a surface resistance of less than or equal to 10⁶ Ω. In one example embodiment, the flame retardant comprises organic phosphorus. In an embodiment, the flame retardant comprises bromide. In an embodiment, the conductive particles comprise carbon fibers. In an embodiment, the flame retardant is at least 5% by weight of the filter media. In an embodiment, the filter media has a flame retardant rating of less than 12,5 cm (5 inches) based on a vertical flame test. In an embodiment, the filter media substantially retains a flame retardant rating of less than 12,5 cm (5 inches) s after three washes. In an embodiment, the filter media has air permeability of at least 64,6 l/m²/s (8 cfm).

In an embodiment, the fiber matrix comprises cellulose fibers. In an embodiment, the filter media further includes a nanofiber layer coupled to the fiber matrix and binder matrix.

In another embodiment, a method of making a filter media is taught. Conductive particles are distributed in a binder, and a fiber matrix is impregnated with the binder. A solution containing at least 5% flame retardant solids is formed and the fiber matrix is saturated in the solution. The saturated, impregnated fiber matrix is dried and cured.

In an embodiment, the conductive particles comprise carbon. In an embodiment, the conductive particles comprise nickel-plated microspheres. In an embodiment, the conductive particles comprise silver-plated microspheres. In an embodiment, the distributing, impregnating, and saturating are executed substantially concurrently. In an embodiment, the saturating is executed after the distributing and impregnating steps. In an embodiment, the binder comprises a resin. In an embodiment, the binder comprises an acrylic. In an embodiment, the method further comprises applying a nanofiber layer to the impregnated fiber matrix.

In an embodiment, a media pack assembly for air filtration is provided. The media pack assembly for air filtration can include coiled single facer media comprising a fluted media sheet secured to a facing media sheet. Each of the facer media and the fluted media can have a fiber matrix, a binder matrix distributed throughout the fiber matrix, and conductive particles impregnated in the binder matrix. A flame retardant is distributed throughout the fiber matrix and the binder matrix.

In an embodiment, the filter media has a surface resistance less than or equal to 10⁶ Ω. In an embodiment, the flame retardant comprises organic phosphorus. In an embodiment, the flame retardant comprises bromide. In an embodiment, the conductive particles comprise carbon fibers. In an embodiment, the flame retardant is at least 5% by weight of the filter media. In an embodiment, the filter media has a flame retardant rating of less than 12,5 cm (5 inches) based on a vertical flame test. In an embodiment, the filter media substantially retains a flame retardant rating of less than 12,5 cm (5 inches) after three washes. In an embodiment, the filter media has air permeability of at least 64.6 l/m²/s (8 cfm). In an embodiment, the fiber matrix comprises cellulose fibers. In an embodiment, the media pack assembly can further include a nanofiber layer coupled to the fiber matrix and binder matrix.

In an embodiment, a media pack assembly for air filtration is provided. The media pack assembly can have a plurality of stacked single facer media each having a fluted media sheet secured to a facing media sheet. Each of the facer media and the fluted media can have a fiber matrix, a binder matrix distributed throughout the fiber matrix, and conductive particles impregnated in the binder matrix. A flame retardant is distributed throughout the fiber matrix and the binder matrix.

In an embodiment, the flame retardant comprises organic phosphorus. In an embodiment, the flame retardant comprises bromide. In an embodiment, the conductive particles comprise carbon fibers. In an embodiment, the flame retardant is at least 5% by weight of the filter media. In an embodiment, the filter media has a flame retardant rating of less than 12,5 cm (5 inches) based on a vertical flame test. In an embodiment, the filter media substantially retains a flame retardant rating of less than 12,5 cm (5 inches) after three washes. In an embodiment, the filter media has air permeability of at least 64.6 l/m²/s (8 cfm). In an embodiment, the fiber matrix comprises cellulose fibers. In an embodiment, the media pack assembly can include a nanofiber layer coupled to the fiber matrix and binder matrix. In an embodiment, the filter media has a surface resistance less than or equal to 10⁶ Ω.

In an embodiment, a media pack assembly for air filtration is provided. The media pack assembly can include pleated filtration media defining an inlet flow face and an outlet flow face. The pleated filtration media can include a fiber matrix, a binder matrix distributed throughout the fiber matrix, and conductive particles impregnated in the binder matrix. A flame retardant is distributed throughout the fiber matrix and the binder matrix. According to one example, the media pack assembly defines a cylindrical filter cartridge. According to another example, the media pack assembly defines a panel filter assembly.

In an embodiment, the flame retardant is at least 5% by weight of the filter media. In an embodiment, the filter media has a flame retardant rating of less than 12,5 cm (5 inches) based on a vertical flame test. In an embodiment, the filter media substantially retains a flame retardant rating of less than 12,5 cm (5 inches) after three washes. In an embodiment, the filter media has air permeability of at least 64.6 l/m²/s (8 cfm). In an embodiment, the fiber matrix comprises cellulose fibers. In an embodiment, the media pack can also include a nanofiber layer coupled to the fiber matrix and binder matrix. In an embodiment, the filter media has a surface resistance less than or equal to 10⁶ Ω. In an embodiment, the flame retardant comprises organic phosphorus. In an embodiment, the flame retardant comprises bromide. In an embodiment, the conductive particles comprise carbon fibers.

### Brief Description of the Drawings

The present technology may be more completely understood and appreciated in consideration of the following detailed description of various embodiments in connection with the accompanying drawings.
**Figure 1** depicts one flow chart of one method consistent with the technology disclosed herein.
**Figure 2** depicts an alternative method consistent with the technology disclosed herein.
**Figure 3** depicts one example implementation of the technology disclosed herein.
**Figure 4** depicts a coiled single facer media pack according to the technology disclosed herein.
**Figure 5** depicts a stacked single facer media pack according to the technology disclosed herein.
**Figure 6** depicts an alternative stacked single facer media pack according to the technology disclosed herein.
**Figure 7** depicts a tubular pleated filter cartridge consistent with the technology disclosed herein.
**Figure 8** depicts an example pleated panel filter media pack consistent with the technology disclosed herein.

### Detailed Description

### Filter Media

Filter media described herein is generally configured to filter a wide variety of particulates from a fluid stream such as an air stream, where the particulates can include liquids or solids such as aerosols and soot. The filter media can be incorporated in many different filter configurations, which will be described in more detail, below. In a variety of embodiments, the filter media itself is a binder matrix distributed throughout a fiber matrix with impregnated conductive particles. A flame retardant is distributed throughout the binder matrix and fiber matrix.

The fiber matrix can be formed from many possible combinations of suitable components. For example, fiber matrix can include organic fibers, such as cellulose, synthetic fibers, such as polyester, or a combination of both organic and synthetic fibers. Any relative combination of organic and synthetic fibers may be used for the fiber matrix depending upon the desired performance and cost parameters for the end product. In some embodiments, there will be at least 70% by weight of organic fibers, in other embodiments there will be at least 80% organic fibers, and in still further embodiments there will be at least 90% organic fibers. The binder matrix can be a solvent or aqueous based binder that is distributed throughout the fiber matrix. In at least one embodiment the binder is acrylic or polyacrylate. In one embodiment the binder includes latex. In multiple embodiments the fiber matrix and the binder matrix are compatible for a wet-laid processing.

The conductive particles impregnated in the media can be a variety of types materials that are generally configured to lower the surface resistivity of the filter media to be less than or equal to 10⁶ Ω/sq at 23°C and 50% relative humidity when a conductive media is desired. When a dissipative media is desired, conductive particles impregnated in the media are generally configured to bring the surface resistivity of the filter media to be greater than or equal to 10⁶ Ω/sq at 23°C and 50% relative humidity. Surface resistivity is determined by following ESD Association test procedure: Surface Resistance measurement of Static-Dissipative Planar Materials EOS/ESD S11.11-1993 or a similar test. This type of test procedure yields a value for surface resistance, from which surface resistivity can be calculated by multiplying the measured surface resistance by ten.

Generally the conductive particles will be substantially evenly distributed throughout the binder matrix and, therefore, the fiber matrix. In one example embodiment, the conductive particles are carbon fibers. In another example, the conductive particles are silver-plated microspheres or nickel-plated microspheres. In yet another example, the conductive particles include carbon such as carbon black. Many other types of conductive particles can be used consistently with the current technology. Combinations of conductive particles can also be used. Additionally, it is possible to incorporate metallic fibers into the fiber matrix and/or binder matrix. In some embodiments, the conductive particles will be no more than 5% by weight of the filter media. In some other embodiments the conductive particles are greater than 5% by weight of the filter media. In some more particular embodiments the conductive particles are greater than 10% by weight of the filter media.

The flame retardant that is distributed throughout the fiber matrix and binder matrix can be any type of material that imparts flame resistance to the filter media. In one embodiment the flame retardant contains organic phosphorus. In another embodiment the flame retardant contains bromide. A more detailed discussion of types of flame retardants is provided below. The flame retardant will generally be at least 5% by weight of the filter media, and could be at least 7%, at least 10%, at least 12% or more of the weight of the filter media. In one embodiment the flame retardant will be less than 50%, less than 30%, or less than 20% of the weight of the filter media, however.

In at least one embodiment, the filter media can include a fine fiber layer, such as a nanofiber layer, where the term "fine fiber layer" refers to a fiber layer where the fibers generally have a diameter ranging from about 200 nm to about 800 nm. A variety of methods can be utilized for the manufacture of fine fiber. Gillingham et al., U.S. Pat. No. 7,090,712; Gillingham et al., U.S. Pat. No. 6,974,490; Kahlbaugh et al., U.S. Pat. No. 6,872,431, Chung et al., U.S. Pat. No. 6,743,273; Gillingham et al., U.S. Pat. No. 6,673,136; Kahlbaugh et al., U.S. Pat. No. 5,423,892; McLead, U.S. Pat. No. 3,878,014; Barris, U.S. Pat. No. 4,650,506; Prentice, U.S. Pat. No. 3,676,242; Lohkamp et al., U.S. Pat. No. 3,841,953; Butin et al., U.S. Pat. No. 3,849,241; and Schindler, et. al., U.S. Pat. No. 7,704,740; and WO06/094076.

### Methods

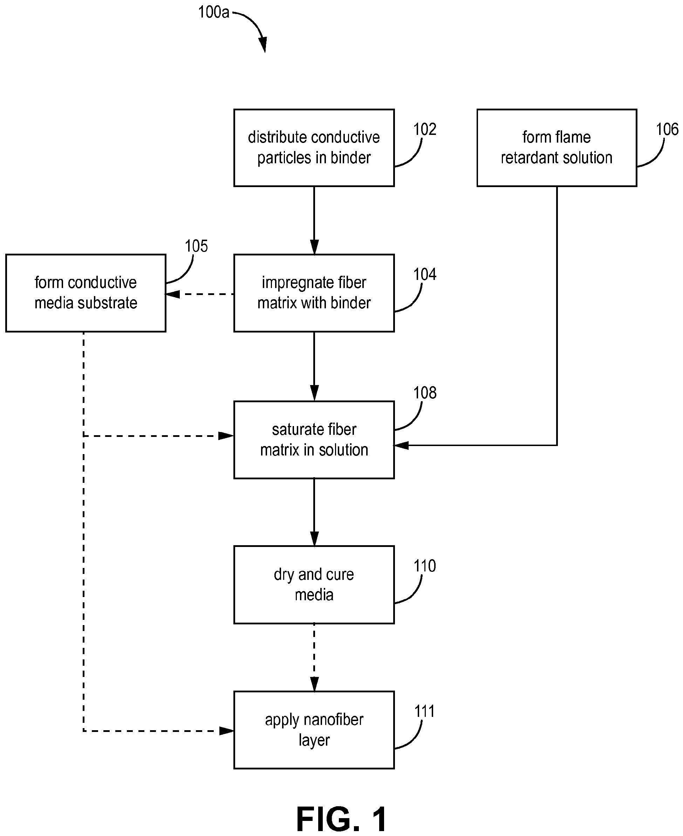

Generally, a variety of methods can be used to manufacture the filter media that has been described herein. Figure 1 is consistent with some embodiments of a method 100a where a binder material, conductive particles and the fiber matrix are combined and then saturated in a flame retardant solution which is then dried and cured to form a flame retardant conductive media. Conductive particles are distributed in a binder 102 and the fiber matrix is impregnated with the binder 104. A flame retardant solution is formed 106 that is used to saturate the fiber matrix 108. The media is then dried and cured 110.

The fiber matrix can be impregnated with the binder 104 in a wet-laid process where the fibers are mixed to form a slurry and then dried to form a sheet of fiber matrix. Subsequently the fiber matrix is impregnated with the binder 104, which has been mixed to form a binder slurry, to form a media substrate that can be held for later curing and drying. In one embodiment, the sheet of fiber matrix is impregnated with the binder material 104 which is then dried and cured to form a conductive media substrate 105. The fiber matrix can be impregnated with the binder matrix 104 from any other process known to those having ordinary skill in the art, as well.

In a variety of embodiments, the conductive particles are distributed throughout the binder material 102 and, therefore, the fiber matrix. In one such embodiment, conductive particles may be distributed among the binder material 102 and fibers prior to formation into a sheet. In an alternative embodiment, the conductive particles can be distributed throughout the binder 102 before the binder being impregnated into the fiber matrix 104. Either approach allows for conductive particles to be relatively evenly distributed throughout the conductive filter media once the media is dried and cured.

The fiber matrix can then be saturated with a flame retardant solution 108, which is then dried and cured 110 to form a flame retardant conductive media. In a variety of embodiments, the flame retardant solution is formed 106 from at least 5%, at least 7%, at least 10%, or at least 15% of flame retardant solids dissolved in a solvent. In some embodiments the flame retardant solution is formed 106 from less than 50%, 30% or 20% flame retardant solids. The flame retardant can be chosen at least partially based on whether the environment of the filter media necessitates a "durable" flame retardant, meaning that a minimum level of flame retardance is maintained after three washes, which will be described in more detail below. In one example embodiment the flame retardant is an organic phosphorus compound such as Pyrovatex® CP obtained from Huntsman International, LLC, High Point, North Carolina, which is a durable flame retardant. In another example embodiment the flame retardant is a nitrogen containing phosphonic acid salt such as FLOVAN® CGN-01 also from Huntsman International, which is a non-durable flame retardant.

Optionally, once a conductive media substrate is formed with conductive particles therein 105, a nanofiber layer can be applied to the conductive media substrate 111 in some embodiments. In a variety of embodiments, the fine fiber material is electrospun directly onto the filter media 111. Other techniques can also be used, as will be appreciated. Generally the fine fiber layer can be configured to allow the filter media to achieve the desired efficiency based on the filtration application and particular environmental needs.

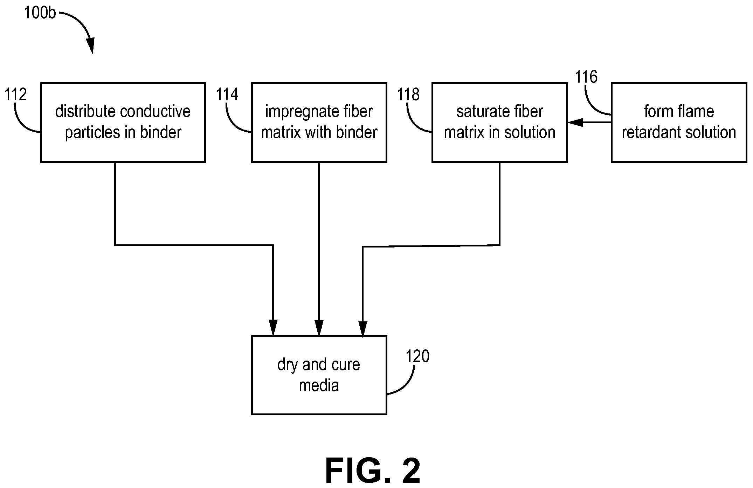

In the above-described method, saturating the fiber matrix in the flame retardant solution 108 is executed after the conductive particles are distributed in the binder matrix 102 and the fiber matrix is impregnated with the binder 104. In some other embodiments, however, such as the method 100b depicted in Figure 2, the conductive particles are distributed in the binder 112 substantially concurrently with impregnating the fiber matrix with the binder 114 and saturating the fiber matrix in the flame retardant solution 118 (after forming the flame retardant solution 116). In other words, in some embodiments, the conductive particles, binder, fiber matrix and flame retardant solution are combined in a single step. In such an embodiment a slurry can be formed by the conductive particles, binder, fiber matrix, and flame retardant, which is dried and cured 120 to form the flame retardant conductive media.

### Media Properties

A filter media consistent with the currently-disclosed technology can be manufactured to be electrically conductive or resistant, depending on the particular environment that the media is used in. If conductive, the filter media will generally have a surface resistance of less than or equal to 10⁶ Ω/sq., discussed above. The filter media can have an air permeability of at least 64.44 m²/min (8 cubic feet per meter(cfm)), 80.55 m²/min (10 cfm), or 97.2 l/m²/min (12 cfm) or even 162 l/m²/min (20 cfm) based on Frazier Air Permeability test methodology. In one embodiment the filter media has an air permeability of around 243 l/m²/min (30 cfm). Generally, the filter media will have a flame retardant rating of less than: 12,5 cm (5 inches) after the flame is extinguished based on the vertical flame test standard DIN 53438 K1.

In a variety of embodiments the filter media can be referred to as "durable," meaning that the filter media is configured to substantially retain a flame retardant rating of less than 12,5 cm (5 inches) after three washes. A single washing of the sample includes mixing 1000 mL of distilled or de-ionized water with 30 drops of an engineering approved surfactant such as Triton X-100™ obtained from Sigma-Aldrich based in St. Louis, Missouri. The sample is gently agitated in the surfactant solution for 11-13 seconds, and then dried for 24 hours. After three washes, the sample is tested in the vertical flame test, described above, to identify whether the minimum flame retardant rating has been maintained.

In various embodiments the filter media consistent with the technology disclosed herein, which is lacking a fine fiber layer, has an efficiency between 10% and 65%. In some embodiments the filter media has an efficiency of at least 30 %, 40%, or 50%. Efficiency is measured according to ASTM #1215-89, with 0.78 µm monodisperse polystyrene spherical particles, at 20 ft/min (6.1 meters/min). Herein this efficiency will be referred to as the "LEFS efficiency". Filter media consistent with the technology disclosed herein that include a fine fiber layer can have a LEFS efficiency of at least 65%, 75%, or even 85%.

Surprisingly, saturating media with flame retardants consistently with the technology disclosed herein does not appear to have a significant negative impact on various properties of the media. Table 1 below reflects data comparing properties of a cellulose and synthetic fiber conductive media (53/40 PE NC2-G BLACK obtained from Ahlstrom based in Helsinki, Finland) after being saturated with flame retardant solutions of different types and strengths. As described above, Pyrovatex® CP is a durable flame retardant and the FLOVAN® CGN is a non-durable flame retardant. Table 2 below reflects data comparing properties of a cellulose dissipative media (Grade FA891 Media obtained from Hollingsworth & Voss based in East Walpole, Massachusetts) after being saturated with flame retardant solutions of different types and strengths. Data associated with the vertical flame test was based on an average from the testing of three substantially identical samples.

**Table 1**

| | **Δ Weight (%)** | **Permeability (ft/min)** | **LEFS** | **Vertical Flame (in.)** | **Resistivity (Ω/sq.)** |
|---|---|---|---|---|---|
| Untreated | 0 | 28.5 | 25.1 | Fail | 1.27 x 10⁶ |
| Saturated with 5% Pyrovatex CP | 6.4 | 26.2 | - | 3.9 | 1.80 x 10⁶ |
| Saturated with 5% Flovan CGN | 8.1 | 25.35 | - | 2.8 | 2.70 x 10⁶ |
| Saturated with 10% Pyrovatex CP | 11.1 | 26.8 | 25.6 | 2.9 | 3.41 x 10⁶ |
| Saturated with 10% Flovan CGN | 14.3 | 25.9 | 27.0 | 2.5 | 2.07 x 10⁶ |
| Saturated with 20% Pyrovatex CP | 26.6 | 26.25 | - | 2.9 | 4.21 x 10⁶ |
| Saturated with 20% Flovan CGN | 29.7 | 25.05 | - | 2.3 | 2.82 x 10⁶ |

| | | | | | |
|---|---|---|---|---|---|
| Permeability 1 ft/min = 8.1 l/m²/min, Vertical flame 1in = 0 2.54 cm | | | | | |

**Table 2**

| | **Δ Weight (%)** | **Permeability (ft/min)** | **LEFS** | **Vertical Flame (in.)** | **Resistivity (Ω/sq.)** |
|---|---|---|---|---|---|
| Untreated | 0 | 22 | 24.1 | Fail | 1x10⁸ |
| Saturated with 5% Pyrovatex CP | 8.7 | 24.25 | - | 8.3 | 1.07 x 10⁸ |
| Saturated with 5% Flovan CGN | 11.1 | 26.80 | - | 2.9 | 3.41 x 10⁶ |
| Saturated with 10% Pyrovatex CP | 11.5 | 19.5 | 24.5 | 4.4 | 2.26 x 10⁷ |
| Saturated with 10% Flovan CGN | 9.2 | 21.5 | 25.4 | 3.1 | 1.10 x 10⁸ |
| Saturated with 20% Pyrovatex CP | 23.8 | 21.3 | - | 3.6 | 7.00 x 10⁷ |
| Saturated with 20% Flovan CGN | 32.5 | 21.45 | - | 3.4 | 9.89 x 10⁷ |

| | | | | | |
|---|---|---|---|---|---|
| Permeability 1 ft/min = 8.1 1/m²/min, Vertical flame 1in = 0 2.54 cm | | | | | |

Each of the samples saturated with the Pyrovatex solution passed the vertical flame test after three washes. As demonstrated above, flame retardant media consistent with the technology disclosed herein can have a permeability that is no less than 70%, 75%, 80%, 85%, 88% or even 90% of the permeability of the untreated media itself, where permeability is Frazier permeability. Also, saturating the media with the flame retardant solution as disclosed herein does not appear to significantly negatively impact surface resistivity, meaning that the surface resistivity generally retains its dissipative or conductive nature. Applicant directly measured the surface resistance for the embodiment herein using a Trek Model 152-1 Resistance meter while following guidelines similar to those set forth in EOS/ESD S11.11-1993.

Also, the efficiency of the filter media does not appear to be significantly negatively impacted from the flame retardant treatment. In the above embodiments for which LEFS data was available, there was no more than an 8% increase in LEFS as a result of the flame retardant treatment. In embodiments consistent with the available LEFS data reflected in Table 2, there is no more than a 6% increase in LEFS as a result of the flame retardant treatment. In some other embodiments there is no more than a 15% increase or a 10% increase in LEFS of the conductive media as a result of a flame retardant treatment.

### Media Pack Assemblies

The filter media consistent with the technology disclosed herein can be incorporated into a variety of types of filter assemblies which will now be described. In one embodiment the media is formed into "z-media" or "z-filter construction," which generally refers to a filter construction in which individual corrugated, folded or otherwise formed filter sheets are used to define sets of longitudinal filter flutes for fluid flow through the media and the fluid flowing along the length of the flutes between opposite inlet and outlet flow ends (or flow faces) of the media is forced to pass through the media. Z-media, is described in, for example, U.S. Pat. Publication No. 2006/0112667 A1; U.S. Pat. Nos. 6,190,432; and 6,348,085.

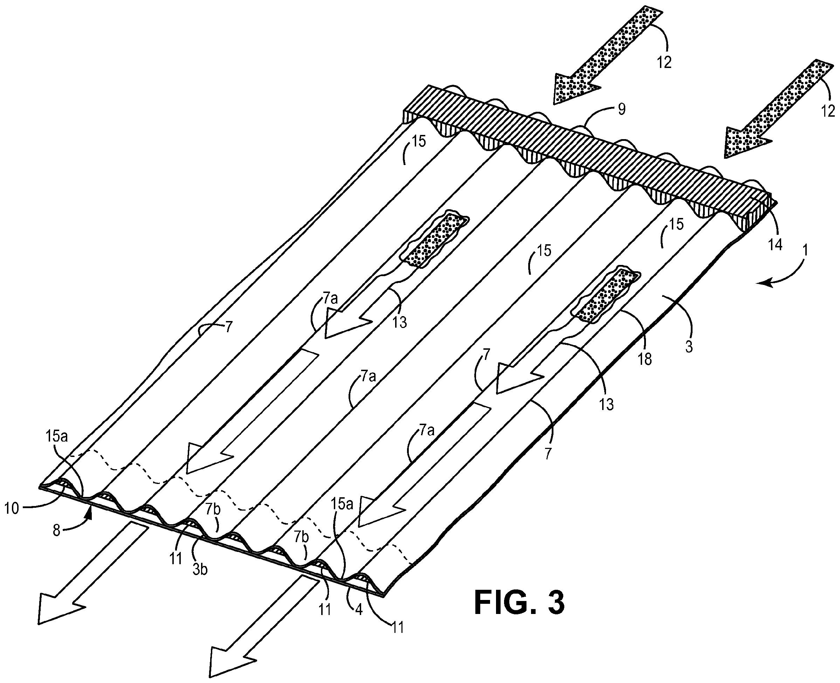

Figure 3 depicts an example sheet of media that can be incorporated into a z-filter construction, which is referred to herein as single facer media. The single facer media 1 is formed from a fluted (in the example corrugated) media sheet 3 and a facing media sheet 4. In general, the fluted corrugated sheet 3 is of a type generally characterized herein as having a pattern of flutes or corrugations 7 defining alternating troughs 7b and hills 7a. The media 1 has first and second opposite ends 8 and 9. The single facer media 1 can be coiled or stacked with other single facer media to be formed into a media pack, and the second end 9 will form an inlet for the media pack through inlet flutes 11 defined by the hills 7a and the first end 8 will form an outlet end through outlet flutes 15 defined by the troughs 7b (although an opposite orientation is possible, as well).

In the example shown, a first sealant bead 14 is disposed along the second end 9, which generally closes the outlet flutes 15 to the passage of unfiltered fluid therein. The bead 14 would typically be applied as the single facer media sheet 1 is coiled or stacked in a filter assembly configuration. Thus, the first sealant bead 14 is configured to form a seal between another facing sheet layer and the fluted sheet 3. A second sealant bead 10 seals the fluted media sheet 3 and the facing media sheet 4 together to close inlet flutes 11 adjacent to the first end 8, to prevent passage of air unfiltered air there-through.

Once the single facer media sheet 1 is incorporated into a media pack assembly, for example by coiling or stacking, it can be operated as follows. First, air in the direction of arrows 12, would enter the open inlet flutes 11 adjacent to the second end 9. Due to the closure at the outlet end 8 by second sealant bead 10, the air would pass through the media of the fluted sheet 3 shown by arrows 13. It could then exit the media pack, by passage through open ends 15a of the outlet flutes 15, adjacent to the first end 8 of the media pack. Of course operation could be conducted with air flow in the opposite direction such that the inlet flutes and the outlet flutes are switched.

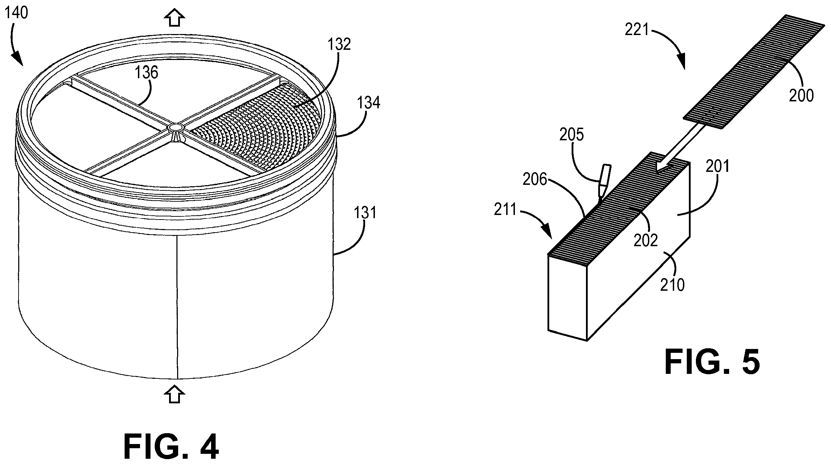

Figure 4 depicts one example implementation of single facer media that is coiled and incorporated into a cylindrical media pack assembly 140. Media housing 131 is cylindrical in shape, with a circular cross-section. Only a portion of the flutes of the upper flow face of the media 132 is depicted; it should be understood that the entire upper flow face 132 would be defined by flute openings of the fluted media (but they have been omitted from the drawing for clarity). A seal member 134 is secured to the media housing 131. The seal member 134 engages the housing 131 to provide a seal so that unfiltered air does not bypass the filtration media 132. The seal member 134 can be characterized as a radial seal because the seal member 134 includes a seal surface that engages the housing 131 in a radial direction to provide sealing. In addition, the media pack assembly 140 can include a media pack cross brace or support structure 136 that helps support the housing 131 and helps reduce telescoping of the air filtration media pack 140.

Figure 5 depicts another example implementation of single facer media that is being stacked and incorporated into a media pack assembly 221. A single facer media strip 200 is being shown added to a stack 201 of single facer media strips that are each analogous to the single facer media strip 200. The media pack assembly 221 has opposite flow faces 210, 211, where the one face is the inlet face 210 and the opposite face is the outlet face 211. The selection of which one of faces 210, 211 is the inlet flow face and which is the outlet flow face, during filtering, is a matter of choice. A stacking bead 206 is shown as being applied by a sealant dispenser 205 between each layer of single facer media 200, 202. In some instances the stacking bead 206 is positioned adjacent the upstream or inlet flow face 210; in others the opposite is true.

The stacked media pack assembly 201 shown being formed in FIG. 5 is sometimes referred to herein as a "blocked" stacked media pack. The term "blocked" in this context, is an indication that the arrangement is formed to a rectangular block in which all faces are 90° relative to all adjoining wall faces. Alternate configurations are possible. For example, in some instances the stack can be created with each strip 200 being slightly offset from alignment with an adjacent strip, to create a parallelogram or slanted block shape, with the inlet face and outlet face parallel to one another, but not perpendicular to upper and bottom surfaces.

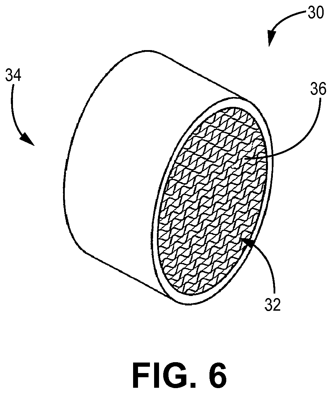

Another example panel media pack assembly 30 of Z-media is depicted in Figure 6 and generally has opposite first 32 and second flow faces 34; with the media 36 defining a plurality flutes, where each of the flutes have a first end portion adjacent to the filter element first flow face 32, and a second end portion adjacent to the filter element second flow face 34. Similar to the configurations described above, selected ones of the flutes are open at the first flow face 32 and closed towards the second flow face 34, and selected ones of the flutes are closed towards the first flow face 32 and open at the second flow face 34.

Each of the embodiments depicted in Figures 4-6 can incorporate conductive or dissipative flame retardant media consistent with the technology disclosed herein. In other words, media having a fiber matrix, a binder matrix distributed throughout the fiber matrix, conductive particles impregnated in the binder matrix, and a flame retardant distributed throughout the fiber matrix and binder matrix can be used to form a single facer media that is either coiled or stacked into a cylindrical or panel media pack assembly.

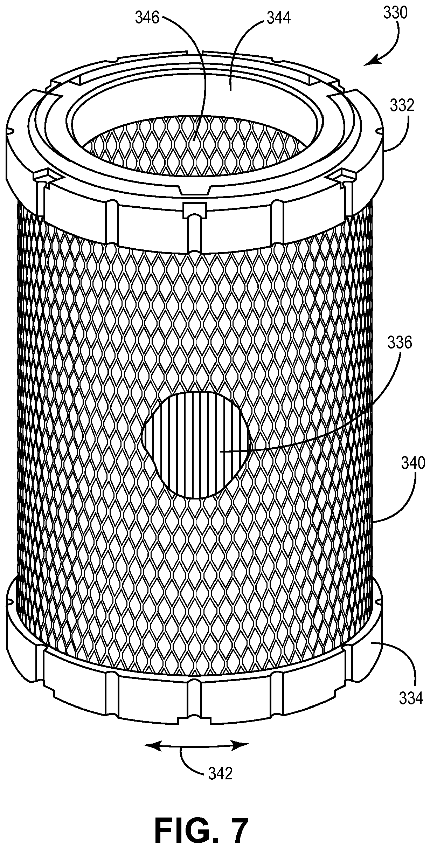

Filter media consistent with the technology disclosed herein can also be incorporated into pleated media pack assembly configurations. Figure 7, for example, depicts a cylindrical filter cartridge that is a tubular media pack assembly 330 defining an interior volume 346. The media pack assembly 330 comprises first 332 and second end caps 334 having pleated media 336 extending therebetweeen. The pleats of the pleated media 336 generally extend in a direction between the end caps 332, 334. The particular media pack assembly 330 of FIG. 7 has an inner liner 346 and an outer liner 340, where the outer liner 340 is shown broken away at one location, for viewing the pleats 336. (Typically, although the pleats 336 can be viewed through the outer liner 340, the media pack assembly 330 is simply not drawn that way for clarity of the drawing.) The outer liner 340 shown comprises expanded metal, although a variety of alternative outer liners, including plastic ones, can be used. In some instances, an outer liner and/or an inner liner is simply not used.

As used herein, the term "tubular filter element" means that the element has filter media that circumscribes an interior volume. The interior volume can have a variety of cross-section shapes including a circular shape, ovular shape, or other geometric shapes. In tubular filter element arrangements, the airflow turns a corner during the filtration process. For forward flow systems, the air flows from a region outside of the assembly 330, through the media 336, into the interior volume 346, and then turns a corner to exit the interior volume 346 through an end cap opening 344. In reverse-flow systems, the air travel is the reverse of forward flow.

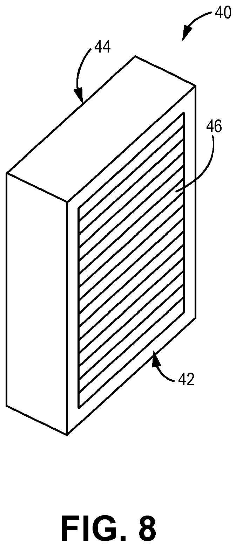

Figure 8 depicts another example implementation of flame retardant conductive/dissipative media 46 in pleated panel media pack assembly 40 having straight-through flow. That is, the air will not have to turn a corner during the filtration process. The filter media 46 is pleated media where the pleats extend across an inlet flow face 42 and an outlet flow face 44 of the media pack assembly 40. While the media pack assembly 40 is shown as a rectangular panel filter, those having skill in the art will appreciate that the filter can be a wide variety of geometric shapes. In some embodiments a combination of a cylindrical filter and a panel filter can be combined in a unitary filter assembly construction.

Each of the embodiments depicted in Figures 7-8 can incorporate conductive or dissipative flame retardant media consistent with the technology disclosed herein. In other words, media having a fiber matrix, a binder matrix distributed throughout the fiber matrix, conductive particles impregnated in the binder matrix, and a flame retardant distributed throughout the fiber matrix and binder matrix can be used to form a pleated media in either a panel or tubular media pack assembly.

It should also be noted that, as used in this specification and the appended claims, the phrase "configured" describes a system, apparatus, or other structure that is constructed or configured to perform a particular task or adopt a particular configuration. The phrase "configured" can be used interchangeably with other similar phrases such as "arranged", "arranged and configured", "constructed and arranged", "constructed", "manufactured and arranged", and the like.

All publications and patent applications in this specification are indicative of the level of ordinary skill in the art to which this technology pertains.

## Claims

1. A filter media comprising:
a fiber matrix,
a binder matrix distributed throughout the fiber matrix;
conductive particles impregnated in the binder matrix; and
a flame retardant distributed throughout the fiber matrix and the binder matrix.

2. The filter media of claim 1, wherein the filter media has a surface resistance of less than or equal to 10⁶ Ω.

3. The filter media of any of claims 1-2, wherein the flame retardant comprises organic phosphorus.

4. The filter media of any of claims 1-3, wherein the flame retardant comprises bromide.

5. The filter media of any of claims 1-4, wherein the conductive particles comprise carbon fibers.

6. The filter media of any of claims 1-5, wherein the flame retardant is at least 5% by weight of the filter media.

7. The filter media of any of claims 1-6, wherein the filter media has air permeability of at least 64,6 l/m²/s (8 cfm).

8. The filter media of any of claims 1-7, wherein the fiber matrix comprises cellulose fibers.

9. The filter media of any of claims 1-8, further comprising a nanofiber layer coupled to the fiber matrix and binder matrix.

10. The filter media of claim 1, wherein the flame retardant is a non-durable flame retardant.

11. A method of making a filter media comprising:
distributing conductive particles in a binder;
impregnating a fiber matrix with the binder;
forming a solution containing at least 5% flame retardant solids;
saturating the fiber matrix in the solution;
drying and curing the saturated, impregnated fiber matrix.

12. The method of claim 11, wherein the conductive particles comprise nickel-plated microspheres.

13. The method of any of claims 11-12, wherein the conductive particles comprise silver-plated microspheres.

14. The method of any of claims 11-13, wherein the distributing, impregnating, and saturating are executed substantially concurrently.

15. The method of any of claims 11-14, wherein the saturating is executed after the distributing and impregnating steps.

16. The method of claim 11, wherein the flame retardant is a non-durable flame retardant.

## Patentansprüche

1. Filtermedium, aufweisend:
eine Fasermatrix,
eine Bindemittelmatrix, die in der Fasermatrix verteilt ist;
leitende Partikel, die in die Bindemittelmatrix imprägniert sind; und
ein Flammschutzmittel, das in der Fasermatrix und der Bindemittelmatrix verteilt ist.

2. Filtermedium nach Anspruch 1, wobei das Filtermedium einen Oberflächenwiderstand von weniger als oder gleich 10⁶ Ω aufweist.

3. Filtermedium nach einem der Ansprüche 1-2, wobei das Flammschutzmittel organischen Phosphor enthält.

4. Filtermedium nach einem der Ansprüche 1-3, wobei das Flammschutzmittel Bromid enthält.

5. Filtermedium nach einem der Ansprüche 1-4, wobei die leitfähigen Partikel Kohlenstofffasern enthalten.

6. Filtermedium nach einem der Ansprüche 1-5, wobei das Flammschutzmittel mindestens 5 Gewichts-% des Filtermediums ausmacht.

7. Filtermedium nach einem der Ansprüche 1-6, wobei das Filtermedium eine Luftdurchlässigkeit von mindestens 64,6 l/m²/s (8 cfm) aufweist.

8. Filtermedium nach einem der Ansprüche 1-7, wobei die Fasermatrix Zellulosefasern enthält.

9. Filtermedium nach einem der Ansprüche 1-8, ferner eine Nanofaserschicht umfassend, die mit der Fasermatrix und der Bindemittelmatrix gekoppelt ist.

10. Filtermedium nach Anspruch 1, wobei das Flammschutzmittel ein nicht dauerhaftes Flammschutzmittel ist.

11. Verfahren zur Herstellung eines Filtermediums, umfassend:
Verteilen von leitfähigen Partikeln in einem Bindemittel;
Imprägnieren einer Fasermatrix mit dem Bindemittel;
Bilden einer Lösung, die mindestens 5% flammhemmende Feststoffe enthält;
Sättigen der Fasermatrix in der Lösung;
Trocknen und Härten der gesättigten, imprägnierten Fasermatrix.

12. Verfahren nach Anspruch 11, wobei die leitfähigen Partikel vernickelte Mikrokugeln umfassen.

13. Verfahren nach einem der Ansprüche 11-12, wobei die leitfähigen Partikel versilberte Mikrokugeln umfassen.

14. Verfahren nach einem der Ansprüche 11-13, bei dem das Verteilen, Imprägnieren und Sättigen im Wesentlichen gleichzeitig ausgeführt werden.

15. Verfahren nach einem der Ansprüche 11-14, wobei die Sättigung nach den Verteilungs- und Imprägnierungsschritten durchgeführt wird.

16. Verfahren nach Anspruch 11, wobei das Flammschutzmittel ein nicht dauerhaftes Flammschutzmittel ist.

## Revendications

1. Milieu filtrant comprenant :
une matrice de fibres ;
une matrice de liant distribuée dans toute la matrice de fibre ;
des particules conductrices imprégnées dans la matrice de liant ; et
un agent ignifugeant distribué dans toute la matrice de fibre et la matrice de liant.

2. Milieu filtrant selon la revendication 1, lequel milieu filtrant a une résistance en surface inférieure ou égale à 10⁶ Ω.

3. Milieu filtrant selon l'une quelconque des revendications 1 et 2, dans lequel l'agent ignifugeant comprend un composé organique du phosphore.

4. Milieu filtrant selon l'une quelconque des revendications 1 à 3, dans lequel l'agent ignifugeant comprend un bromure.

5. Milieu filtrant selon l'une quelconque des revendications 1 à 4, dans lequel les particules conductrices comprennent des fibres de carbone.

6. Milieu filtrant selon l'une quelconque des revendications 1 à 5, dans lequel l'agent ignifugeant représente au moins 5 % en poids du milieu filtrant.

7. Milieu filtrant selon l'une quelconque des revendications 1 à 6, lequel milieu filtrant a une perméabilité à l'air d'au moins 64,6 l/m²/s (8 cfm).

8. Milieu filtrant selon l'une quelconque des revendications 1 à 7, dans lequel la matrice de fibres comprend des fibres de cellulose.

9. Milieu filtrant selon l'une quelconque des revendications 1 à 8, comprenant en outre une couche de nanofibres couplée à la matrice de fibres et à la matrice de liant.

10. Milieu filtrant selon la revendication 1, dans lequel l'agent ignifugeant est un agent ignifugeant non durable.

11. Procédé de production d'un milieu filtrant, comprenant :
la distribution de particules conductrices dans un liant ;
l'imprégnation d'une matrice de fibres avec le liant ;
la formation d'une solution contenant au moins 5 % de solides ignifugeants ;
la saturation de la matrice de fibres dans la solution ;
le séchage et le durcissement de la matrice de fibres imprégnée saturée.

12. Procédé selon la revendication 11, dans lequel les particules conductrices comprennent des microsphères plaquées de nickel.

13. Procédé selon l'une quelconque des revendications 11 et 12, dans lequel les particules conductrices comprennent des microsphères plaquées d'argent.

14. Procédé selon l'une quelconque des revendications 11 à 13, dans lequel la distribution, l'imprégnation et la saturation sont exécutées pratiquement en même temps.

15. Procédé selon l'une quelconque des revendications 11 à 14, dans lequel la saturation est exécutée après les étapes de distribution et d'imprégnation.

16. Procédé selon la revendication 11, dans lequel l'agent ignifugeant est un agent ignifugeant non durable.
